# EUROPÄISCHE PATENTANMELDUNG

(11) **EP 1 093 040 A1**
(43) Veröffentlichungstag der Anmeldung: **18.04.2001**
(21) Anmeldenummer: 00121949.2
(22) Anmeldetag: 09.10.2000
(51) Int. Cl.: G05B 23/02

(54) **Diagnosesystem und Verfahren zur Erfassung von Funktionsstörungen**

(30) Priorität: 14.10.1999 DE 19949475
(71) Anmelder: Voith Turbo GmbH & Co. KG, 89522 Heidenheim (DE)
(72) Erfinder: Tengler, Heinz, 89558 Böhmenkirch (DE)
(74) Vertreter: Dr. Weitzel & Partner

(57) **Zusammenfassung**

Die Erfindung betrifft ein Diagnosesystem für eine Getriebebaueinheit, insbesondere für den Einsatz in Fahrzeugen mit einer, der Getriebebaueinheit zugeordneten Steuervorrichtung, umfassend eine Steuereinrichtung (4); mit einer Diagnoseeinrichtung (5), welche elektrisch mit der Steuereinrichtung koppelbar ist. Es sind eine Mehrzahl, der Getriebebaueinheit zugeordnete Erfassungseinrichtungen, welche frei von einer Kopplung mit der Steuereinrichtung sind und die mit der Diagnoseeinrichtung elektrisch verbunden sind, vorgesehen.

## Beschreibung

Die Erfindung betrifft ein Diagnosesystem, insbesondere für eine Getriebebaueinheit mit zugeordneter elektronischer Steuervorrichtung, insbesondere für den Einsatz in Fahrzeugen, im einzelnen mit den Merkmalen aus dem Oberbegriff des Anspruches 1; ferner ein Verfahren zur Erkennung von Funktionsstörungen einer Getriebebaueinheit.

Bei Getriebebaueinheiten in Form von hydrodynamisch-mechanischen Verbundgetriebebaueinheiten mit elektronischer Steuerung können mit den für die Realisierung der einzelnen Betriebsweisen zur Bereitstellung der Eingangsgrößen erforderlichen Erfassungseinrichtungen, insbesondere für die Steuerung erforderlichen Sensoren bereits zahlreiche Funktionsstörungen in der zur Leistungsübertragung erforderlichen beziehungsweise zu einer Änderung des Übertragungsverhaltens zu betätigenden Mechanik oder Hydraulik erkannt werden. Das Diagnosesystem nutzt dabei die für die Getriebesteuerung zur Erfassung der Eingangsgrößen erforderlichen Einrichtungen zur Bestimmung bestimmter Funktionsgrößen. Eine Reihe von Fehlfunktionen können jedoch nur durch einen erfahrenen Monteur mittels zusätzlicher Messungen erfaßt werden. Bei diesen Zusatzmessungen handelt es sich in der Regel um Druckmessungen an vorhandenen Meßstellen. Diese zusätzliche Erfaßung und Auswertung dieser Größen setzt jedoch eine bestimmte Erfahrung voraus, so daß damit nur geschultes Personal betraut werden kann, welches die Meßgrößen einer weiteren Auswertung und Verarbeitung im richtigen Zusammenhang zuführt.

Der Erfindung liegt daher die Aufgabe zugrunde, ein Diagnosesystem der eingangs genannten Art derart weiterzuentwickeln, daß die genannten Nachteile vermieden werden, insbesondere es auch unerfahrenen Anwendern erlaubt, ein optimales Diagnoseergebnis zu erhalten beziehungsweise Funktionsstörungen sofort zu erkennen, was zu einer Erhöhung der Verfügbarkeit und der Sicherheit des Gesamtsystems, insbesondere beim Einsatz von Getriebebaueinheiten in Fahrzeugen führt.

Die erfindungsgemäße Lösung ist durch die Merkmale der Ansprüche 1 und 11 charakterisiert. Vorteilhafte Ausgestaltungen sind in den Unteransprüchen wiedergegeben.

Ein Diagnosesystem für eine Getriebebaueinheit, insbesondere für den Einsatz in Fahrzeugen mit einer der Getriebebaueinheit zugeordneten Steuervorrichtung ist erfindungsgemäß derart ausgestaltet, daß eine Diagnoseeinrichtung vorgesehen ist, welche mit der Steuervorrichtung elektrisch gekoppelt ist, und über die Kopplung die Betriebsweise und/oder die Funktionsweise der Getriebebaueinheit charakterisierende Größen und/oder von der Steuervorrichtung zur Bildung der Stellgrößen für die Änderung der Funktionsweise und/oder der Leistungsübertragung über die Getriebebaueinheit erforderliche zu verarbeitende Eingangsgrößen, welche vom Fahrzeug und/oder der Umgebung des Antriebsstranges bestimmbar sind, von der Steuervorrichtung ausgelesen werden können und der Diagnoseeinrichtung zur Diagnosefunktion beziehungweise zur Auswertung im Sinne einer Beurteilung der Funktionsfähigkeit zugeführt werden können. Bei den mittels der Steuervorrichtung beziehungsweise Steuereinrichtung bereitgestellten Größen handelt es sich um Größen, welche die Betriebsweise und/oder Funktionsweise der Getriebebaueinheit wenigstens mittelbar charakterisieren und/oder zur Bestimmung der Stellgrößen zur Ansteuerung der Stelleinrichtung der Getriebebaueinheit erforderlich sind. Zusätzliche, zu einer umfassenden Diagnose erforderliche Größen, welche nicht direkt zur Ansteuerung der Getriebebaueinheit erforderlich sind, werden mittels separater Erfassungseinrichtungen ermittelt, die der Getriebebaueinheit unmittelbar beziehungsweise an den zur Erfassung bestimmten Stellen zugeordnet sind. Diese sind jeweils über Einzelverbindungen mit der Diagnoseeinrichtung gekoppelt. Die Art der verwendeten Erfassungseinrichtungen und deren Anordnung kann nach Getriebebaueinheit und den gestellten Anforderungen des Einsatzfalles variieren.

Des weiteren sind Mittel vorgesehen, welche eine Anzeige und/oder Dokumentation der Diagnoseergebnisse ermöglichen. Die Diagnoseeinrichtung selbst umfaßt Mittel zur Verarbeitung und/oder Auswertung der dieser zugeführten Eingangsgrößen. Das Diagnosesystem umfaßt des weiteren Mittel zur Anzeige und/oder Dokumentation der mittels der Diagnoseeinrichtung erstellten Auswertung der Eingangsgrößen. Die Mittel zur Anzeige und Dokumentation und die Mittel zur Verarbeitung und/oder Auswertung können dabei von unterschiedlichen Vorrichtungen gebildet werden, oder aber von einer gemeinsamen Vorrichtung. Vorzugsweise sind die Mittel zur Anzeige und Dokumentation funktional und räumlich von den Mitteln zur Verarbeitung und Auswertung getrennt angeordnet. Die Daten können bei Bedarf über eine Datenschnittstelle zu einem Diagnoselaptop übertragen werden. Das Diagnoselaptop kann bei Bedarf im Diagnosesystem integriert, insbesondere mit der Diagnoseeinrichtung elektrisch verbunden werden. Dies bietet den Vorteil, daß unabhängig von der Anordnung der Diagnoseeinrichtung im Fahrzeug bei Bedarf jederzeit ein Auslesen der Daten aus der Diagnoseeinrichtung vorgenommen werden kann. Zusätzlicher Bauraum für die Mittel zur Anzeige ist nicht bereitzustellen.

Die erfindungsgemäße Lösung ermöglicht es unter Einbeziehung der bereits ohnehin vorhandenen Steuervorrichtung für die Ansteuerung der Getriebebaueinheit mit einer Diagnoseeinrichtung, welche Zugriff auf die zur Getriebesteuerung erforderlichen Ein- und Ausgangsgrößen hat und die in der Lage ist, zusätzliche Informationen, insbesondere über weitere, im Fahrzeug angeordnete Erfassungseinrichtungen ermittelte Größen zu verarbeiten und diese Größen auszuwerten und über entsprechende Mittel anzuzeigen und zu dokumentieren. Der vorrichtungsmäßige Aufwand für das Diagnoseverfahren wird dadurch erheblich minimiert und es können des weiteren sämtliche Diagnosefunktionen ausgeführt werden, ohne daß besondere Anforderungen an die Schulung bzw. Ausbildung der die Diagnose durchführenden Person gestellt müssen.

Das erfindungsgemäße Verfahren sieht vor, die in der Steuervorrichtung der Getriebebaueinheit bereits abgegriffenen Meßgrößen und Statusinformationen durch Informationen von zusätzlichen Erfassungseinrichtungen zu ergänzen und zu verarbeiten. Dabei erfolgt der Diagnosevorgang derart, daß der Betreiber beim Einsatz der Getriebebaueinheit in Fahrzeugen eine definierte Probefahrt hinsichtlich vorgebbarer Randbedingungen durchführt, bei welcher eine Mehrzahl von Betriebszuständen durchlaufen werden, jedoch alle die, welche mit hoher Wahrscheinlichkeit bei Annahme eines Normalbetriebes über eine bestimmte Zeitdauer erreicht werden. Die Auswertung in der Diagnoseeinrichtung erfolgt dabei zumindest in Abhängigkeit beziehungsweise unter Berücksichtigung vom Betriebszustand beziehungsweise der Funktionsweise der Getriebebaueinheit.

Unter einem weiteren Aspekt der Erfindung besteht die Möglichkeit, neben der vom Betriebszustand beziehungsweise vom Funktionszustand abhängigen Auswertung der Meßgrößen zusätzlich gespeicherten Betriebsdaten, zum Beispiel eine Meßgrößenentwicklung über eine bestimmte Zeitdauer, zum Beispiel eine Temperaturverteilung während einer bestimmten vordefinierten Betriebsdauer mit zu berücksichtigen. Derartige Informationen dienen der Erhöhung der Diagnosewahrheit.

Vorrichtungsmäßig bestehen für die Ausführung der Diagnosevorrichtung eine Vielzahl von Möglichkeiten. Die Diagnoseeinrichtung kann dabei entweder
a) in unmittelbarer räumlicher Nähe der Getriebesteuervorrichtung und/oder
b) in unmittelbarer Nähe der Getriebebaueinheit oder
c) in einer großen Entfernung von der Getriebebaueinheit beziehungsweise der Getriebesteuerung angeordnet werden.

Vorzugsweise wird dabei eine Anordnung der Diagnoseeinrichtung in unmittelbarer Nähe der Getriebebaueinheit bevorzugt, da in diesem Fall eine aufwendige Verkabelung zwischen der Diagnoseeinrichtung und den Erfassungseinrichtungen vermieden, beziehungsweise die erforderliche Verkabelung zwischen den Elementen sehr kurz gehalten werden kann.

Zur Minimierung des Leitungsaufwandes ist die Diagnoseeinrichtung vorzugsweise über Mittel zur seriellen Datenübertragung mit der Steuervorrichtung der Getriebebaueinheit, insbesondere der Steuereinrichtung gekoppelt. Die Mittel zur seriellen Datenübertragung umfassen dazu wenigstens ein Leitungspaar oder eine zweiadrige Leitung über welche nacheinander eine Vielzahl von Informationen beziehungsweise Daten zwischen Diagnoseinrichtung und Steuervorrichtung übertragen werden können.

Unter einem weiteren Aspekt werden zusätzlich auch die Mittel zur Spannungsversorgung für die Diagnoseeinrichtung von der Steuervorrichtung der Getriebebaueinheit gebildet. In diesem Fall erfolgt die Kopplung zwischen Getriebesteuervorrichtung und Diagnoseeinrichtung über lediglich eine wenigstens vieradrige Leitung, mittels welcher die Schnittstellenfunktion zwischen Diagnoseeinrichtung und Steuervorrichtung und die Spannungsversorgung realisiert werden kann. Auch bei entfernter Anordnung der Getriebesteuervorrichtung beziehungsweise der Steuereinrichtung von der Getriebebaueinheit und damit der Diagnoseeinrichtung von der Steuervorrichtung kann mittels der Leitung beziehungsweise des Leitungspaares eine hinsichtlich ihrer Verlegung im Fahrzeug relativ unabhängige Verbindung geschaffen werden, welche aufgrund der Funktionsteilung sich auch durch einen geringen Bauteilaufwand auszeichnet.

Aufwendige Verkabelungen entfallen. Das Gesamtsystem kann kostengünstig angeboten werden.

Unter einem weiteren Aspekt gilt dies auch für die Kopplung zwischen der Diagnoseeinrichtung und den Mitteln zur Anzeige und/oder Dokumentation der Diagnoseergebnisse. Die Mittel, insbesondere das Diagnoselaptop ist dabei ebenfalls über Mittel zur seriellen Datenübertragung mit der Diagnoseeinrichtung gekoppelt. Durch die Verwendung von Mitteln zur seriellen Datenübertragung besteht die Möglichkeit, sowohl von seiten der Diagnoseeinrichtung der Steuervorrichtung beziehungsweise der Steuereinrichtung der Getriebebaueinheit Größen zur Verfügung zu stellen, als auch umgekehrt. Dies gilt auch für die Kommunikation zwischen Diagnoselaptop und Diagnoseeinrichtung. Dabei ist in beiden Fällen ein unabhängiger beidseitiger Datenaustausch möglich, so daß auch die Steuervor- beziehungsweise -einrichtung der Getriebebaueinheit bei der Ansteuerung der Getriebebaueinheit auf Größen, insbesondere Auswertergebnisse der Diagnoseeinrichtung zurückgreifen kann und diese bei Bildung der Stellgrößen für den Ansteuervorgang der Getriebebaueinheit, insbesondere der einzelnen der Getriebebaueinheit zugeordneten Stelleinrichtungen mit berücksichtigt.

Vorzugsweise handelt es sich bei den Erfassungseinrichtungen um Drucksensoren, welche an verschiedenen Meßstellen der Getriebebaueinheit Drücke im System insbesondere der Getriebebaueinheit und/oder der zur Realisierung der Leistungsübertragung direkt und indirekt erforderlichen Betriebsmittel - und/oder Schmiermittel - und/oder Steuermittelversorgungs- und -leitungssysteme oder der Kühlkreisläufe erfassen. Die Ermittlung dieser Drücke dient dabei zur Realisierung der folgenden Prüffunktionen:
- Prüfung der Schmiermitteldrücke
- Prüfung der Steuerdrücke
- Prüfung der Füllpumpendrücke
- Prüfung der Funktion der Traktionskreisläufe bei Verwendung hydrodynamischer Baueinheiten
- Prüfung der Funktion hydrodynamischer Bremselemente

Unter einem weiteren Aspekt der Erfindung besteht die Möglichkeit, die Diagnoseeinrichtung mit einem entsprechenden Zusatzmodul zur Diagnose weiterer Elemente, beuspielsweise von Lageranordnungen und Zahnrädern auszurüsten. In diesem Fall sind zusätzliche Größen, die Funktionsweise und Lebensdauer der Lageranordnungen und/oder der Zahnräder wenigstens mittelbar beschreibende Größen zu erfassen. Diese werden dann in Abhängigkeit von der Betriebs- beziehungsweise Funktionsweise der Getriebebaueinheit mit in der Diagnoseeinrichtung ausgewertet.

Die erfindungsgemäße Lösung ist nachfolgend anhand von Figuren erläutert. Darin ist im einzelnen folgendes dargestellt:
- Figur 1: verdeutlicht in schematisch vereinfachter Darstellung den grundlegenden Aufbau eines erfindungsgemäß gestalteten Diagnosesystems;
- Figur 2: verdeutlicht in schematisch vereinfachter Darstellung anhand eines Blockschaltbildes die Funktion eines erfindungsgemäß gestalteten Diagnosesystems, insbesondere ein erfindungsgemäßes Verfahren zur Diagnose einer Getriebebaueinheit.

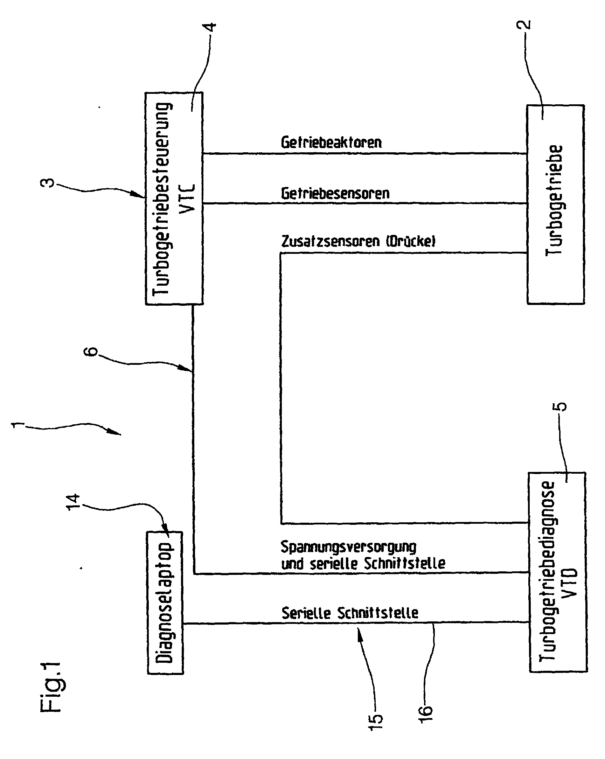

Die Figur 1 verdeutlicht in schematisch vereinfachter Darstellung den Grundaufbau eines erfindungsgemäßen Diagnosesystems 1 für eine Getriebebaueinheit 2, insbesondere ein hydrodynamisch-mechanisches Verbundgetriebe, vorzugsweise ein Turbogetriebe. Das Diagnosesystem 1 nutzt dabei wenigstenes einen Teil die der, der Getriebebaueinheit 2 zugeordneten Steuervorrichtung 3, umfassend wenigstens eine Steuereinrichtung 4 zugeführten Eingangsgrößen und/oder die mittels der Steuervorrichtung 3 an der Steuereinrichtung 4 erzeugten Ausgangsgrößen. Das Diagnosesystem 1 umfaßt dazu eine Diagnoseeinrichtung 5, welche an beliebiger Stelle im Fahrzeug anordenbar ist und die mit der Steuervorrichtung 3, insbesondere der Steuereinrichtung 4 gekoppelt ist. Die Kopplung ist mit 6 bezeichnet. Diese umfaßt im einfachsten Fall eine Leitung 7, vorzugsweise jedoch ein Leitungspaar, welches als serielle Schnittstelle zwischen Diagnoseeinrichtung 5 und Steuereinrichtung 4 fungiert. Des weiteren sind der Diagnoseeinrichtung 5 Mittel zur Spannungsversorgung 8 zugeordnet. Bei den Mitteln zur Spannungsversorgung 8 kann es sich um eine separate Spannungsversorgungseinrichtung handeln. Denkbar ist jedoch auch, wie in der Figur 1 dargestellt, die Spannungsversorgung über die Steuereinrichtung 4 der Steuervorrichtung 3 zu realisieren. In diesem Fall ist eine weitere Leitung 9 vorgesehen. Die Leitung 7 und die Leitung 9 können jedoch auch zu einer vieradrigen Leitung 10 zusammengefaßt werden, welche die beiden Funktionen - Schnittstellenfunktion durch serielle Verbindung und Spannungsversorgung durch Kopplung der Diagnoseeinrichtung 5 mit der Steuervorrichtung 3, insbesondere der Steuereinrichtung 4 - ermöglichen. Die zur Beurteilung der Funktionsweise der Getriebebaueinheit 2 ermittelbaren und auswertbaren Größen, welche der Steuervorrichtung 3 zugeführt werden, können somit auch der Diagnoseeinrichtung 5 zur Verfügung gestellt werden. Zur Ermittlung weiterer Fehlfunktionen, welche nicht über die Steuervorrichtung 3 im Rahmen der normalen Ansteuerung der Getriebebaueinheit 2 durch die Diagnoseeinrichtung 5 ermittelt werden können, sind zusätzliche Erfassungseinrichtungen 11 vorgesehen, welche der Getriebebaueinheit 2 zugeordnet sind. Bei den Erfassungseinrichtungen 11 handelt es sich dabei hauptsächlich um Sensoren zur wenigstens mittelbaren Erfassung eines Druckwertes oder einer, einen Druckwert wenigstens mittelbar charakterisiernden Größe.

Die einzelnen Erfassungseinrichtungen sind dabei jeweils über eine Leitungsverbindung mit der Diagnoseeinrichtung 5 gekoppelt. Die Leitung ist mit 12 bezeichnet.

Des weiteren umfaßt das Diagnosesystem 1 Mittel 13 zur Anzeige und/oder Dokumentation der Diagnoseergebnisse. Die Mittel umfassen wenigstens eine elektronische Control-Unit 14, vorzugsweise in Form eines Diagnoselaptops. Diese ist zu diesem Zweck über Mittel 15 mit der Diagnoseeinrichtung 5 gekoppelt. Die Mittel 15 umfassen dabei vorzugsweise wenigstens ein serielles Übertragungsmittel 16, welches als serielle Schnittstelle fungiert und einen Datenaustausch zwischen dem Diagnoselaptop, insbesondere der elektronischen Control-Unit 14 und der Diagnoseeinrichtung 5 ermöglicht.

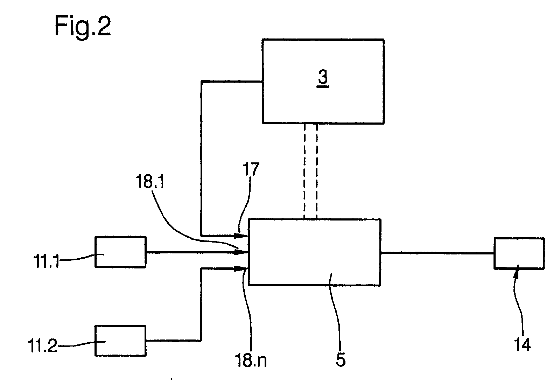

Die mittels einem erfindungsgemäß gestalteten Diagnosesystem 1 gemäß Figur 1 realisierbaren Funktionen zur Diagnose einer Getriebebaueinheit 2 ist in stark vereinfachter Darstellung anhand eines Blockschaltbildes in der Figur 2 verdeutlicht. Für gleiche Elemente werden die gleichen Bezugszeichen verwendet. In Figur 2 wird ersichtlich, daß die Diagnoseeinrichtung 5 über wenigstens zwei Eingänge, einen ersten Eingang 17 und einen zweiten Eingang 18 verfügt. Der erste Eingang 17 dient dabei der Zufuhr beziehungsweise Aufnahme der mittels der Steuervorrichtung 3, insbesondere der Steuereinrichtung 4 zur Ansteuerung der Getriebebaueinheit 2 erforderlichen und für die Diagnoseeinrichtung 5 bereitstellbaren Signale. Der Eingang 17 kann dabei gleichzeitig auch als Ausgang fungieren, wobei in diesem Fall der der Getriebebaueinheit 2 zugeordneten Steuervorrichtung 3, insbesondere der Steuereinrichtung 4 zur Ansteuerung der Getriebebaueinheit 2 Größen zur Verfügung gestellt werden, welche auf der Grundlage der in der Diagnoseeinrichtung 5 erfolgenden Auswertung der einzelnen erfaßbaren Daten zur Verfügung gestellt werden können. Der weitere Eingang 18 ist mit einer Erfaßungseinrichtung 11 gekoppelt. Dabei ist es denkbar, eine Vielzahl von weiteren Eingängen 18.1 bis 18.n vorzusehen, welche jeweils mit einer Einrichtung zur Erfassung einer die Funktionsweise beziehungsweise den Betrieb der Getriebebaueinheit wenigstens mittelbar charakterisierenden Größe koppelbar sind.

In der Diagnoseeinrichtung 5 werden die an den Eingängen 17 und 18 als Signal anliegenden Größen verarbeitet. Diesbezüglich kann je nach Diagnoseaufgabe die Diagnoseeinrichtung 5 unterschiedlich ausgestaltet sein. Beispielsweise umfaßt diese Vergleichseinrichtungen und/oder Berechnungseinrichtungen, welche nach einem vorgegebenen Algorithmus beispielsweise bestimmte Folgegrößen ermitteln. Denkbar ist auch die Ausführung der Diagnoseeinrichtung 5 mit einer Speichereinheit, in welcher eine Vielzahl von Eingangsgrößen, ermittelbaren beziehungsweise berechenbaren Größen statistisch festgehalten und ausgewertet werden können, vorzugsweise wenigstens über eine bestimmte Zeitdauer.

Die mittels der Diagnoseeinrichtung 5 ermittelten Ergebnisse können in Form eines Prüfprotokolls dem Fahrer beziehungsweise der die Prüfung vornehmenden Person zur Verfügung gestellt werden. Dies geschieht über die Mittel zur Anzeige und Kontrolle der Prüfergebnisse. Die Anordnung der Diagnoseeinrichtung 5 im Fahrzeug und der Mittel 13 zur Anzeige beziehungsweise Auswertung der mit der Diagnoseeinrichtung 5 ermittelten Ergebnisse können dabei an beliebiger Stelle im Fahrzeug angeordnet werden. Vorzugsweise erfolgt dabei die Anordnung der Diagnoseeinrichtung in räumlicher Nähe zum Fahrerhaus beziehungsweise an einer leicht zugänglichen Stelle, welche eine Kopplung mit den Mitteln 13 zur Anzeige und/oder Dokumentation der Prüfergebnisse erlaubt. Die Getriebesteuervorrichtung selbst ist vorzugsweise im Bereich der Getriebebaueinheit 2 beziehungsweise in deren unmittelbarer räumlicher Nähe angeordnet.

Die Diagnose wird in der Regel beim Einsatz der Getriebebaueinheit 2 in Fahrzeugen während einer vordefinierten Probefahrt durchgeführt. Diese Probefahrt ist dabei dadurch charakterisiert, daß eine Mehrzahl der möglichen Betriebszustände, vorzugsweise jedoch alle durchlaufen werden. Dabei werden die einzelnen, von der Getriebesteuervorrichtung 3 zu verarbeitenden und/oder von dieser gebildeten Größen, welche den Funktionszustand der Getriebebaueinheit 2 wenigstens mittelbar charakterisieren in die Diagnoseeinrichtung 5 eingelesen und in Abhängigkeit des aktuellen Betriebszustandes der Getriebebaueinheit 2 bewertet. Die Informationen von der der Getriebebaueinheit 2 zugeordneten Steuervorrichtung 3 werden dabei über die serielle Diagnoseschnittstelle, insbesondere die Kopplung 6 beziehungsweise die Leitung 7 oder das Leitungspaar 10 zur Diagnoseeinrichtung 5 geleitet. Die übrigen Erfassungseinrichtungen 11, beispielsweise 11.1 bis 11.n werden jeweils über entsprechende Einzelleitungen 12.1 bis 12.n an die Diagnoseeinrichtung 5 angeschlossen. Nach dem Anschluß der Diagnoseeinrichtung 5 führt der Betreiber eine definierte Probefahrt durch, bei der eine Vielzahl, vorzugsweise jedoch alle Betriebszustände durchlaufen werden. Dabei können von ihm während oder nach der Probefahrt durch die Ankopplung eines Diagnoselaptops über die zweite serielle Schnittstelle, insbesondere die seriellen Übertragungsmittel 16 Ergebnisse aus der Diagnoseeinrichtung 5 abgerufen werden.

Unter einem weiteren Aspekt der Erfindung bewertet die Diagnoseeinrichtung 5 zusätzlich zu der vom aktuellen Betriebs- beziehungsweise Funktionszustand der Getriebebaueinheit 2 abhängigen Auswertung der Messgrößen, die in der Steuereinrichtung 4 der Getriebebaueinheit 2 abgespeicherten Betriebsdaten, welche beispielsweise die Temperaturverteilung der Getriebebaueinheit während der Betriebszeit oder einer bestimmten vordefinierbaren Zeitdauer beschreiben. Mit der Auswertung und zusätzlichen Berücksichtigung dieser Betriebsdaten wird eine Erhöhung der Diagnosewahrheit erzielt.

Die Kopplung der Diagnoseeinrichtung 5 kann, wie bereits ausgeführt, an beliebiger Stelle ausgeführt werden. Vorzugsweise wird jedoch eine Anordnung im Bereich der Getriebebaueinheit 2 angestrebt, da in diesem Fall die aufwendige Verkabelung der einzelnen Erfassungsmittel 11 mit der Diagnoseeinrichtung 5 entfällt, da die Erfassung in der Regel im Bereich der Getriebebaueinheit 2 erfolgt.

Mit den aus der Getriebesteuerung und den Erfassungseinrichtungen 11.1 - 11.n ermittelten Informationen ist es möglich, mittels der Diagnoseeinrichtung während einer Probefahrt auch die korrekte Funktion aller Magnetventile, Hauptsteuerungen und Schaltzylinder sowie die Schmier-, Steuer- und Füllpumpendrücke zu prüfen. Eine zusätzliche Prüfung der Retarderfunktion in Getriebebaueinheiten mit integriertem Retarder ist ebenfalls möglich. Der Diagnosebefund ist über die Mittel zur Anzeige 14, insbesondere ein Laptop abrufbar und dokumentierbar.

Die Anzahl der verwendeten Erfassungseinrichtungen 11 und die Art der mit diesen ermittelbaren Größen richtet sich nach den Erfordernissen hinsichtlich der Funktionssicherheit der Getriebebaueinheit 2 beziehungsweise des gesamten Antriebsstranges. Denkbar ist es, die zusätzliche Druckerfassung mittels der Erfassungsmittel 11 derart vorzunehmen, daß Fehlfunktionen der einzelnen Ventileinrichtungen vermieden werden können. Unter einem weiteren besonderen Aspekt der Erfindung ist es auch möglich, zusätzliche Diagnosefunktionen, welche primär nichts mit der Betriebsweise der Getriebebaueinheit zu tun haben, vorzunehmen. Denkbar ist dabei eine Zahnraddiagnose der in der Getriebebaueinheit 2 miteinander kämmenden Zahnräder und/oder eine Diagnose der in der Getriebebaueinheit 2 verwendeten Wälzlager.

Die konkrete konstruktive Ausführung des Diagnosesystems 1 liegt dabei im Ermessen des zuständigen Fachmannes und ist nicht an eine konkrete Ausführung hinsichtlich der zu verarbeitenden Eingangsgrößen gebunden.

### Bezugszeichenliste

- 1: Diagnosesystem
- 2: Getriebebaueinheit
- 3: Steuervorrichtung
- 4: Steuereinrichtung
- 5: Diagnoseeinrichtung
- 6: Kopplung
- 7: Leitung
- 8: Mittel zur Spannungsversorgung
- 9: Leitung
- 10: Vieradrige Leitung
- 11: Erfassungseinrichtungen
- 12: Leitung
- 13: Mittel zur Anzeige und/oder Dokumentation der Diagnosergebnisse
- 14: Elektrische Control-Unit
- 15: Mittel zur Kopplung zwischen Diagnoseeinrichtung und den Mitteln zur Anzeige und/oder Dokumentation
- 16: Serielles Übertragungsmittel
- 17: Eingang
- 18: Eingang

## Patentansprüche

1. Diagnosesystem (1) für eine Getriebebaueinheit (2), insbesondere für den Einsatz in Fahrzeugen;
1.1 mit einer, der Getriebebaueinheit (2) zugeordneten Steuervorrichtung (3), umfassend eine Steuereinrichtung (4);
1.2 mit einer Diagnoseeinrichtung (5), welche elektrisch mit der Steuereinrichtung (4) koppelbar ist;
1.3 mit einer Mehrzahl, der Getriebebaueinheit (2) zugeordneten Erfassungseinrichtungen (11, 11.1 - 11.n) direkt für Größen, welche nicht zur Aussteurung der Getriebbaueinheit (2) erforderlich sind, welche frei von einer Kopplung mit der Steuereinrichtung (4) sind und die mit der Diagnoseeinrichtung (5) elektrisch verbunden sind.

2. Diagnosesystem (1) nach Anspruch 1, dadurch gekennzeichnet, daß die Steuereinrichtung (4) der Getriebebaueinheit (2) in unmittelbarer räumlicher Nähe der Getriebebaueinheit (2) angeordnet ist.

3. Diagnosessystem (1) nach Anspruch 1 oder 2, dadurch gekennzeichnet, daß die Steuereinrichtung (4) in der Getriebebaueinheit (2) integriert ist.

4. Diagnosesystem (1) nach einem der Ansprüche 1 bis 3, dadurch gekennzeichnet, daß die Diagnoseeinrichtung (5) in räumlicher Entfernung zur Steuereinrichtung (4) der Getriebebaueinheit (2) angeordnet ist.

5. Diagnosesystem (1) nach einem der Ansprüche 1 bis 4, dadurch gekennzeichnet, daß Mittel (13) zur Anzeige und/oder Dokumentation der Diagnoseergebnisse vorgesehen sind.

6. Diagnosesystem (1) nach Anspruch 5, dadurch gekennzeichnet, daß die Mittel zur Anzeige und/oder Dokumentation der Diagnoseergebnisse von einer separat an die Diagnoseeinrichtung anschließbaren Rechnereinheit mit Display gebildet werden.

7. Diagnosesystem (1) nach einem der Ansprüche 1 bis 6, dadurch gekennzeichnet, daß die elektrische Kopplung zwischen der Steuereinrichtung (4) der Getriebebaueinheit (2) und der Diagnoseeinrichtun g (5) Mittel zur seriellen Datenübertragung erfaßt.

8. Diagnosesystem (1) nach Anspruch 7, dadurch gekennzeichnet, daß Mittel (8) zur Spannungsversorgung der Diagnoseeinrichtung (5) vorgesehen sind und diese Mittel von der Steuereinrichtung (4) gebildet werden, wobei die Mittel zur seriellen Datenübertragung und die Mittel zur Spannungsversorgung in einer vieradrigen Leitung zusammenfaßbar sind.

9. Diagnosesystem (1) nach einem der Ansprüche 1 bis 8, dadurch gekennzeichnet, daß die Erfassungseinrichtungen Sensoren umfassen, welche an verschiedenen Meßstellen der Getriebebaueinheit (2) Drücke in den Betriebsmittel- und/oder Schmiermittel- und/oder Steuermittel- und/oder Kühlmittelversorgungs- beziehungsweise Leitungssystemen erfassen.

10. Verfahren zur Erfassung von Funktionsstörungen einer Getriebebaueinheit (2) mittels eines Diagnosesystems gemäß einem der Ansprüche 1 bis 9, bei welchem neben den die Funktionsweise und/oder die Betriebsweise der Getriebebaueinheit charakterisierenden Größen, welche der Steuervorrichtung der Getriebebaueinheit (2) entnehmbar sind, zusätzliche, Größen, welche nicht direkt zur Ansteuerung der Getriebebaueinheit erforderlich sind und/oder zur Bestimmung der Stellgrößen zur Ansteuerung der Stelleinrichtungen der Getriebebaueinheit erforderlich sind beziehungsweise deren Funktionszustand beschreiben mittels separaten Erfassungseinrichtungen ermittelt werden und in der Diagnoseeinrichtung (5) ausgewertet werden.

11. Verfahren nach Anspruch 10, dadurch gekennzeichnet, daß die der Diagnoseeinrichtung (5) zugeführten Eingangsgrößen über eine bestimmte Zeitdauer des Betriebes der Getriebebaueinheit ermittelt und statistisch erfaßt werden.
